# EUROPÄISCHE PATENTSCHRIFT

(11) **EP 0 624 490 B1**
(45) Veröffentlichungstag und Bekanntmachung des Hinweises auf die Patenterteilung: **11.09.1996**
(21) Anmeldenummer: 94106942.9
(22) Anmeldetag: 04.05.1994
(51) Int. Cl.: B60N 3/08

(54) **Ascher für Fahrzeuge**
Ashtray for vehicles
Cendrier pour véhicules

(30) Priorität: 11.05.1993 DE 4315584
(43) Veröffentlichungstag der Anmeldung: 17.11.1994
(73) Patentinhaber: GEBR. HAPPICH GmbH, D-42285 Wuppertal (DE)
(72) Erfinder: Volkers, Jan, D-41462 Neuss (DE); Wick, Volkhard, D-42799 Leichlingen (DE); Dabringhaus, Volker, D-42109 Wuppertal (DE)

(56) Entgegenhaltungen:
- EP-A- 0 121 119
- GB-A- 276 147
- US-A- 4 087 126
- US-A- 4 535 923

## Beschreibung

Die Erfindung bezieht sich auf einen Ascher für Fahrzeuge mit einem Aschergehäuse und einem von diesem aufgenommenen Aschertopf sowie mit einer Getränkedosenhalterung.

Ascher für Fahrzeuge sind in den unterschiedlichsten Ausführungsformen bekanntgeworden und erfreuen sich allgemeiner Beliebtheit, und zwar auch bei Nichtrauchern, die den Aschertopf in der Regel zur Unterbringung von Kleinutensilien benutzen.

Ein Ascher für Fahrzeuge der vorgenannten Art ist in den Unterlagen der EP-A- 0 121 119 als bekannt entnehmbar. Bei diesem bekannten Ascher ist das Aschergehäuse mit Aufnahmen zur einendigen Festlegung von Ausrüstungsteilen, zu denen auch Trinkbecherhalter gehören, ausgebildet. Die Aufnahmen sind als Stecköffnungen im Aschergehäuse oder als Zapfen am Aschergehäuse ausgebildet und geeignet, entsprechend gestaltete Endstücke der Ausrüstungsteile in auswechselbarer Anordnung aufzunehmen. Der bei diesem bekannten Ascher gezeigte Trinkbecherhalter ist nur zur Halterung konischer Trinkbecher geeignet.

Die US-A- 4 087 126 zeigt eine Konsole in einem Fahrzeug, auf der ein plattenförmiger Trägerkörper befestigt ist. Oberhalb des Trägerkörpers erstreckt sich mit gewissem Abstand und parallel zum Trägerkörper eine Lagerplatte, die auf Tragstützen abgestützt ist. Die Lagerplatte weist mehrere Durchgangsöffnungen mit darin eingesetzten Ausrüstungsteilen, wie Ascher, Abfallbehälter und als Getränkedosenhalterungen dienende Ringkörper auf. Bei der in der US-A- 4 087 126 gezeigten Anordnung bildet der Trägerkörper ein eine Getränkedose od. dgl. abstützendes Tragelement und jeder Ringkörper ein davon beabstandetes, die Getränkedose od. dgl. umgreifendes Halteelement.

Aufgabe der vorliegenden Erfindung ist es, einen Ascher der eingangs genannten Art weitergehend nutzbar zu machen und einen Ascher zur Verfügung zu stellen, der insbesondere zum Einsatz in Öffnungen von beliebigen Fahrzeugeinbauteilen geeignet ist und dessen Getränkedosenhalterung eine problemlose Unterbringung von Getränken ermöglichen soll. Darüber hinaus soll der Ascher elegant und kostengünstig sein.

Zur Lösung dieser Aufgabe ist erfindungsgemäß vorgesehen, daß das Aschergehäuse aus einem Kunststoff-Spritzgußteil besteht, an dem einstückig und materialeinheitlich ein zusätzliches wannenförmig ausgebildetes Gehäuseteil mit einem in der Einbaulage senkrecht orientierten Boden angeformt ist, das zur Aufnahme der Getränkedosenhalterung bestimmt ist, welche ein eine Getränkedose od. dgl. abstützendes Tragelement und davon beabstandet ein die Getränkedose zumindest bereichsweise umgreifendes Halteelement aufweist, wobei das Tragelement und das Halteelement schwenkbeweglich in dem Gehäuseteil gelagert sind, um diese Elemente aus einer sich parallel zum Boden erstreckenden Nichtgebrauchslage in eine horizontale Gebrauchslage überführen zu können.

Vorteilhafte Ausgestaltungen und zweckmäßige Weiterbildungen der Erfindung sind in den Unteransprüchen angegeben.

Ausführungsbeispiele der Erfindung werden im folgenden anhand der Zeichnung näher erläutert. Es zeigen:
- Fig. 1: den vertikalen Schnitt durch einen Ascher gemäß einer ersten Ausführungsform,
- Fig. 2: den vertikalen Schnitt durch einen Ascher gemäß einer zweiten Ausführungsform,
- Fig. 3: den vertikalen Schnitt durch einen Ascher gemäß einer dritten Ausführungsform,
- Fig. 4: eine Ansicht gemäß Pfeilrichtung X nach Fig. 1 und
- Fig. 5: einen Schnitt etwa folgend der Linie V-V in Fig. 1.

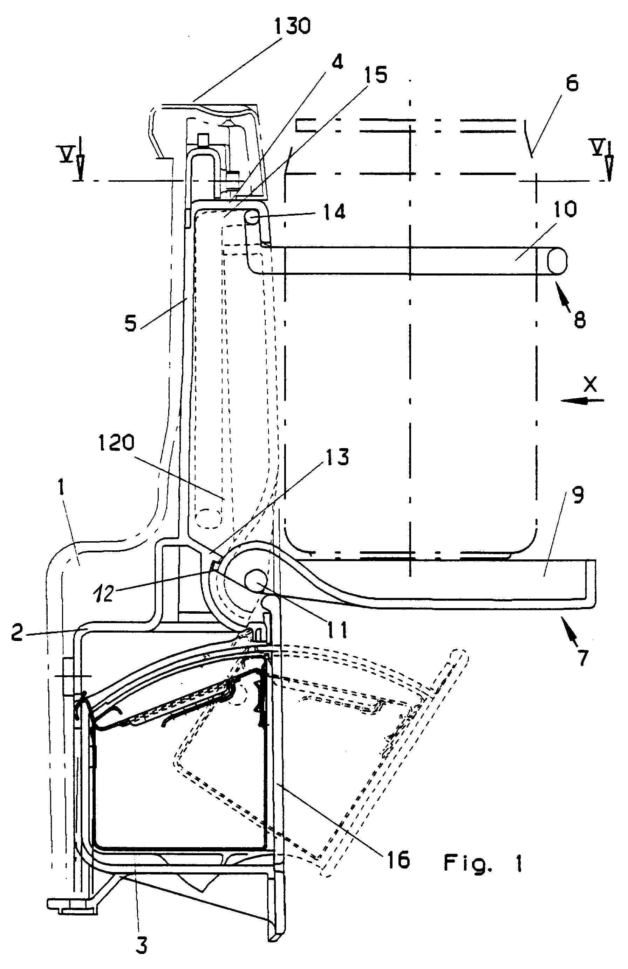

Fig. 1 zeigt einen Ascher, der in die Öffnung 1 eines Fahrzeugeinbauteils, in Sonderheit einer Fahrzeugkonsole eingebaut ist. Der Ascher weist ein Aschergehäuse 2 und einen Aschertopf 3 auf. Beim Ausführungsbeispiel handelt es sich um einen Kippascher, bei dem der Aschertopf 3 durch eine Schenkbewegung aus seiner mit starken Linien dargestellten Nichtgebrauchslage in seine mit gestrichelten Linien dargestellten Gebrauchslage überführt werden kann. Die Erfindung ist aber auch bei einem Ascher mit schubladenartig im Aschergehäuse 2 angeordneten Aschertopf 3 realisierbar.

Das Aschergehäuse 2, das als Kunststoff-Spritzgußteil ausgebildet ist weist ein daran einstückig und materialeinheitlich angeformtes zusätzliches Gehäuseteil 4 auf, das wannenförmig ausgebildet ist und einen senkrecht orientierten Boden 5 besitzt. Das zusätzliche Gehäuseteil 4 bildet eine kopfseitige Verlängerung des Aschergehäuses 2 und dient zur Aufnahme einer Getränkedosenhalterung, die ein eine Getränkedose 6 oder eine Getränkeflasche, einen Becher od. dgl. abstützendes Tragelement 7 und ein die Getränkedose 6 zumindest bereichsweise umgreifendes Halteelement 8, die in der Gebrauchslage parallel zueinander angeordnet sind, umfaßt. Das Tragelement 7 ist als Deckelklappe 9 und das Halteelement 8 ist als Ringhalter 10 ausgebildet.

Die Deckelklappe 9 ist um eine waagerecht ausgerichtete, im unteren Bereich des zusätzlichen Gehäuseteils 4 angeordneten Achse 11 schwenkbar gelagert und kann aus einer die Öffnung 120 des Gehäuseteils 4 verschließenden Stellung (Nichtgebrauchslage), wie mit gestrichelten Linien dargestellt, in eine waagerecht ausgerichtete Stellung (Gebrauchslage), wie mit stark ausgezogenen Linien dargestellt, verschwenkt werden. In der Gebrauchslage wird die Deckelklappe 9 durch daran angeformte Anschläge 12, die mit Gegenanschlägen 13 am Gehäuseteil 4 zusammenwirken, gehalten. In der Nichtgebrauchslage erfolgt die Halterung der Deckelklappe 9 durch eine Verriegelungsvorrichtung nach Art einer Tip-Automatik (nicht gezeigt) oder einer ebenfalls nicht näher dargestellten Rastausbildung.

Der Ringhalter 10 ist im oberen Bereich des zusätzlichen Gehäuseteils 4 um eine parallel zur Achse 11 ausgerichtete Achse 14 schwenkbar gelagert, um den Ringhalter 10 aus seiner Nichtgebrauchslage (gestrichelt dargestellt) in seine Gebrauchslage (mit ausgezogenen Linien dargestellt) überführen zu können. Die Anlenkung erfolgt über Winkelarme 15, damit der Ringhalter 10 in der Nichtgebrauchslage unmittelbar und damit platzsparend am Boden 5 des Gehäuseteils 4 zur Anlage kommen kann. Die Deckelklappe 9 deckt den Ringhalter 10 in der Nichtgebrauchslage ab und liegt im übrigen mit der Frontplatte 16 des Aschertopfs 3 auf einer gemeinsamen senkrechten Ebene.

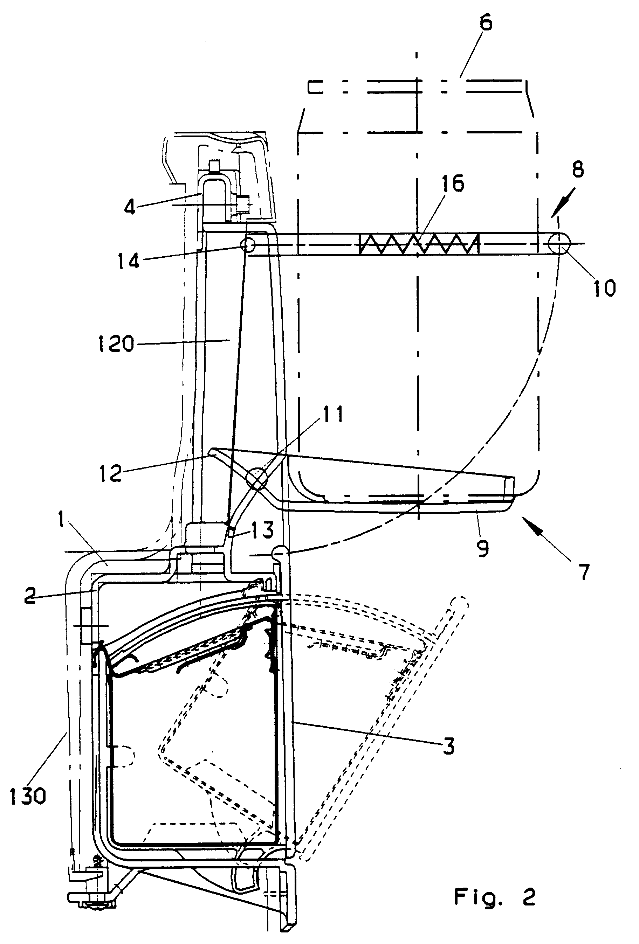

Das Ausführungsbeispiel nach Fig. 2 entspricht hinsichtlich der Hauptbauelemente dem nach Fig. 1, so daß für übereinstimmende Teile auch übereinstimmende Bezugszeichen verwendet worden sind. Eine Veränderung gegenüber Fig. 1 besteht darin, daß der Aschertopf 3 wesentlich größer gewählt wurde, was bei gleich bemessenem Aschergehäuse 2 und Gehäuseteil 4 eine Verkleinerung der Deckelklappe 9 und einer Verlagerung der Anlenkung für diese verlangte, wie dies in Fig. 2 verdeutlich ist. Um ein Einklappen des Ringhalters 10 in die Öffnung 120 zu ermöglichen, kann dieser z.B. teleskopierbar und in der ausgefahrenen Stellung durch eine Feder 16 belastet sein.

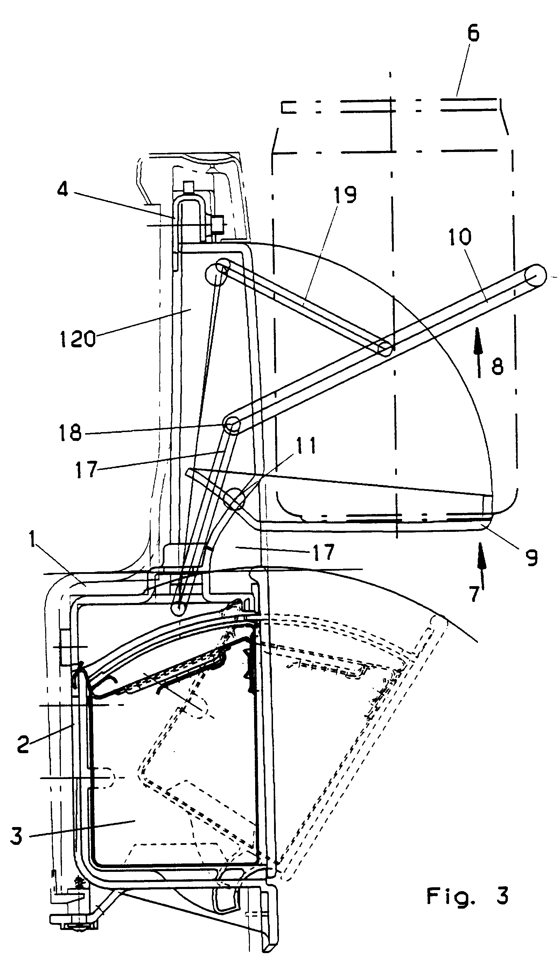

Beim Ausführungsbeispiel nach Fig. 3, bei dem für übereinstimmende Teile wiederum auch übereinstimmende Bezugszeichen eingesetzt sind, ist ebenfalls ein relativ großer Aschertopf 3 vorgesehen. Die Deckelklappe 9 und deren Anlenkung am Gehäuseteil 4 entspricht der Ausbildung nach Fig. 2. Die Ausbildung und Anlenkung ermöglicht durch eine dadurch geschaffene Griffmulde 17 eine leichte Bedienbarkeit des Aschertopfs 3.

Die Größe und Gestaltung des Ringhalters 10 ist gegenüber Fig. 1 unverändert. Der Ringhalter 10 kann hier in der Öffnung 120 in einfacher Weise durch eine Führung untergebracht werden, bei der an gegenüberliegenden Seiten des Gehäuseteils 4 Kulissennuten 17, darin gleitende Zapfen 18 und Schwenkhebel 19 beteiligt sind. Die Schwenkhebel 19 sind einendig gehäuseseitig und anderendig ringhalterseitig angelenkt.

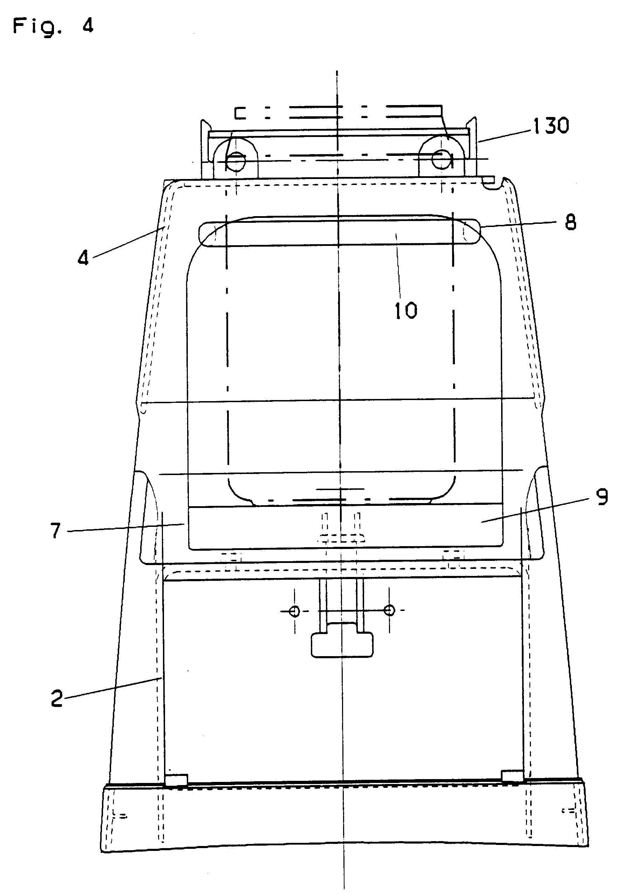

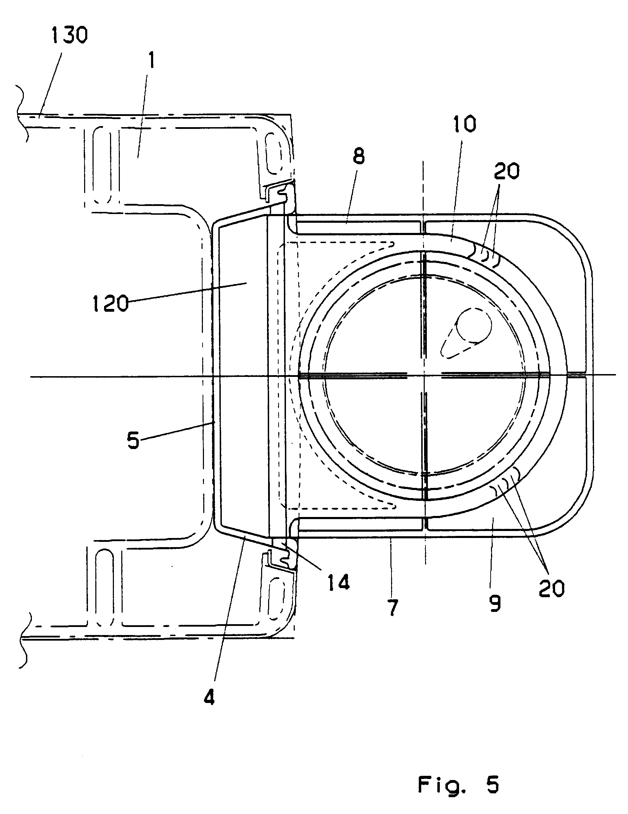

Fig. 4 und 5 zeigen im wesentlichen die neue Ascher-Getränkehalter-Einrichtung in Vorderansicht und Draufsicht und lassen erkennen, daß diese Einrichtung auch ästhetischen Ansprüchen zu genügen vermag.

Fig. 5 zeigt zudem die Möglichkeit den Ringhalter 10 als nach vorne offen auszubilden, um ihn platzsparender in der Öffnung 120 unterbringen zu können. Der Ringhalter 10 kann also verkürzt sein und an den mit 20 gekennzeichneten Linien enden.

Der neue Ascher ist insbesondere zum Einsatz in Öffnungen 120 von beliebigen Fahrzeugeinbauteilen bestimmt. In den dargestellten Ausführungsbeispielen ist er in einer Öffnung 120 einer Fahrzeugkonsole 130 eingesetzt und damit von den Fondinsassen eines Fahrzeugs zugänglich. Dieser Einsatz ist von besonderem Vorteil, weil hier aus fertigungstechnischen Gründen ohnehin eine das zusätzliche Gehäuseteil 4 aufnehmende Öffnungsenweiterung vorhanden ist, die früher verblendet werden mußte und durch die Erfindung in sinnvoller Weise nutzbar gemacht wurde. Darüber hinaus wird durch den neuen Ascher ein vornehmlich im Fondbereich eines Fahrzeugs vorhandenes Bedürfnis, Getränke problemlos unterbringen zu können gelöst und zudem noch äußerst elegant und kostengünstig.

## Patentansprüche

1. Ascher für Fahrzeuge mit einem Aschergehäuse (2) und einem von diesem aufgenommenen Aschertopf (3) sowie mit einer Getränkedosenhalterung, dadurch gekennzeichnet, daß das Aschergehäuse (2) aus einem Kunststoff-Spritzgußteil besteht, an dem einstückig und materialeinheitlich ein zusätzliches wannenförmig ausgebildetes Gehäuseteil (4) mit einem in der Einbaulage senkrecht orientierten Boden (5) angeformt ist, das zur Aufnahme der Getränkedosenhalterung bestimmt ist, welche ein eine Getränkedose (6) od. dgl. abstützendes Tragelement (7) und davon beabstandet ein die Getränkedose (6) zumindest bereichsweise umgreifendes Halteelement (8) aufweist, wobei das Tragelement (7) und das Halteelement (8) schwenkbeweglich in dem Gehäuseteil (4) gelagert sind, um diese Elemente (7, 8) aus einer sich parallel zum Boden (5) erstreckenden Nichtgebrauchslage in eine horizontale Gebrauchslage überführen zu können.

2. Ascher nach Anspruch 1, dadurch gekennzeichnet, daß das Halteelement (8) um eine horizontal ausgerichtete, im oberen Bereich des Gehäuseteils (4) angeordnete Achse (14) schwenkbar und in der Nichtgebrauchslage dem Boden (5) unmittelbar benachbart ist, während das Tragelement (7) um eine horizontal ausgerichtete, im unteren Bereich des Gehäuseteils (4) angeordnete Achse (11) schwenkbar ist, in der Nichtgebrauchslage am Halteelement (8) anliegt und als Deckelklappe (9) ausgebildet ist.

3. Ascher nach Anspruch 1 oder 2, dadurch gekennzeichnet, daß das zusätzliche Gehäuseteil (4) das eigentliche Aschergehäuse (2) seitlich oder nach unter oder nach oben überragt.

4. Ascher nach wenigstens einem der Ansprüche 1 bis 3, dadurch gekennzeichnet, daß Mittel vorgesehen sind, um das Tragelement (7) wie auch das Halteelement (8) sowohl in der Gebrauchslage als auch in der Nichtgebrauchslage zu arretieren.

5. Ascher nach wenigstens einem der Ansprüche 1 bis 4, dadurch gekennzeichnet, daß das Halteelement (8) als ggf. vorderseitig offener Ringhalter (10) ausgebildet ist.

## Claims

1. An ash-tray for vehicles with an ash-tray housing (2) and an ash-tray vessel (3) lodged in said housing and with a tin-holder, **characterized in that** the ash-tray housing (2) consists of an injection-moulded part of plastics on which an additional trough-like housing part (4) is integrally moulded in one piece and in material integration, provided with a bottom (5) oriented in a vertical direction in the installation position, for lodging the tin holder, which receives a carrying element (7) for the tin (6) or a similar object and at a distance from it a holding element (8), which embraces at least part of the tin (6), the carrying element (7) and the holding element (8) being pivotally supported in the housing part (4),in order to bring these elements (7,8) from a position of non-use parallel to the bottom (5) to a horizontal position of use.

2. An ash-tray according to claim 1, **characterized in that** the holding element (8) is movable about a horizontal axle (14) mounted in the upper portion of the housing part (4) and in the position of rest lies very near to the bottom (5), the carrying element (7) being movable about a horizontal axle (11) provided in the lower portion of the housing part (4) and rests on the holding element (8) in the position of non-use and is configured like a lid (9).

3. An ash-tray according to claim 1 or 2, **characterized in that** the additional housing part (4) protrudes from the ash-tray housing (2) in a lateral, downward or upward direction.

4. An ash-tray according to at least one of the claims 1 - 3, **characterized in that** it is provided with means, which lock the carrying element (7) and the holding element (8) in the position of use as well as in the position of non-use.

5. An ash-tray according tO at least one of the claims 1 - 4, **characterized in that** the holding element (8) is configured as a ring holder (10) if necessary provided with a front opening.

## Revendications

1. Cendrier pour véhicules comprenant un boîtier (2) de cendrier et un pot à cendres (3) reçu dans ledit boîtier (2) et comprenant également une retenue pour une boîte à boisson, caractérisé en ce que le boîtier (2) de cendrier est une pièce de matière synthétique moulée par injection, sur laquelle est conformée, d'une seule pièce et dans la même matière, une autre partie (4) du boîtier, cette autre partie étant en forme de cuvette et ayant un fond (5) qui à la position d'assemblage est monté selon une orientation verticale et est adapté à recevoir la retenue pour la boîte à boisson, cette retenue comportant un élément de support (7) destiné à soutenir une boîte (6) ou similaire et, espacé de celui-ci, un élément de retenue (8) entourant au moins partiellement la boîte à boisson (6) en l'engageant, la boîte à boisson (6), l'élément de support (7) et l'élément de retenue (8) étant supportés de manière oscillante par l'autre partie (4) du boîtier pour transférer ces éléments (7,8) depuis une position de non utilisation s'étendant parallèlement au fond (5), jusqu'à une position d'utilisation horizontale.

2. Cendrier selon la revendication 1, caractérisé en ce que l'élément de retenue (8) est susceptible d'osciller autour d'un axe (14) orienté horizontalement et disposé à la zone supérieure de l'autre partie (4) de boîtier, et il se trouve directement proche du fond (5) dans sa position de non utilisation, alors que l'élément de support (7) est oscillant autour d'un axe (11) orienté horizontalement et disposé à la zone inférieure de la partie (4) de boîtier, repose sur l'élément de retenue (8) dans sa position de non utilisation et est agencé en guise de couvercle relevable (9).

3. Cendrier selon la revendication 1 ou 2, caractérisé en ce que l'autre partie (4) du boîtier fait saillie latéralement, vers le bas ou vers le haut du véritable boîtier (2) de cendrier.

4. Cendrier selon l'une au moins des revendications 1 à 3, caractérisé en ce qu'on prévoit des moyens pour fixer soit l'élément de support (7) soit l'élément de retenue (8) tant en position d'utilisation qu'en position de non utilisation.

5. Cendrier selon l'une au moins des revendications 1 à 4, caractérisé en ce que l'élément de retenue (8) est en forme de support annulaire (10) éventuellement ouvert sur son côté avant.
